# EUROPÄISCHE PATENTSCHRIFT

(11) **EP 1 355 113 B1**
(45) Veröffentlichungstag und Bekanntmachung des Hinweises auf die Patenterteilung: **04.01.2006**
(21) Anmeldenummer: 03008577.3
(22) Anmeldetag: 14.04.2003
(51) Int. Cl.: F24F 5/00, F24D 3/16

(54) **Heiz- und Kühlsystem für Gebäude**
Heating and cooling system for building
Système de chauffage et de refroidissement pour un bâtiment

(30) Priorität: 15.04.2002 DE 10216632
(43) Veröffentlichungstag der Anmeldung: 22.10.2003
(73) Patentinhaber: Gmür, Harry, 8302 Kloten (CH)
(72) Erfinder: Gmür, Harry, 8302 Kloten (CH)
(74) Vertreter: Zimmermann & Partner

(56) Entgegenhaltungen:
- DE-A- 2 848 573
- DE-A- 3 543 545
- GB-A- 2 178 521
- US-A- 5 577 554

## Beschreibung

### Technisches Gebiet

Die Erfindung bezieht sich auf die Gebäudetechnik, insbesondere die Gebäudeheiz- und kühltechnik. Sie geht aus von einem Heiz- und Kühlsystem nach dem Oberbegriff des ersten Anspruchs.

### Stand der Technik

Moderne für eine flexible Nutzung ausgelegte Gebäude werden häufig über die Decke bzw. den Boden oder eventuell die Wände beheizt, temperiert und gekühlt. Zu diesem Zwecke werden in die Primärstrukturen der Gebäude, d.h. zum Beispiel die Betondecke, -wand oder den -boden, wasserführende Rohrsysteme eingelegt. Die Geschossböden oder -wände dienen somit als Wärme- oder Kältespeicher. Durch die Einführung eines solchen Rohrsystems werden die Bauteile wie Betondecken, -böden oder -wände zu thermisch aktiven Flächen, die je nach Bedarf angesteuert werden können. Im Sommer wird die Energie z.B. tagsüber im Bauteil zwischengespeichert und über Nacht abgeführt. Im Winter kann das in das Bauteil eingelegte Rohrsystem als Heizregister dienen.

Die Firma Vescal AG, CH-8603 Schwerzenbach, Schweiz, bietet unter der Bezeichnung geschützten Bezeichnung TABS (Thermoaktives Bauteilsystem) ein derartiges Heiz- und Kühlsystem an. Das Rohrsystem ist dabei vorzugsweise modulartig aufgebaut. Ein Modul besteht z.B. aus einem schlangenförmig angeordneten Kunststoffrohr, das auf einem Stahlnetz o.ä. angeordnet sind. Die Module werden unmittelbar nach dem Einbringen der Unterarmierung montiert und anschliessend die Oberarmierung aufgelegt. Dank des Stahlnetzes sind die verlegten Module jederzeit begehbar, und das Rohrsystem ist gut geschützt. Nach der Montage der Armierung werden die Module mit Beton vergossen. Im Betrieb ist das Rohrsystem an ein Heiz- und/oder Kühlgerät angeschlossen.

Ein Heiz- und Kühlsystem nach dem Oberbegriff von Anspruch 1 ist in DE 100 49 419 A offenbart.

Die bestehenden Systeme weisen den Nachteil auf, dass für den Fall, dass in einem Gebäude nach dem Bau weit höhere Wärmelasten als geplant abgeführt werden müssen, zusätzliche Kühlelemente, wie abgehängte Kühldecken oder ähnliches eingebaut werden müssen. Dadurch wird die primäre, oben erläuterte Heiz- und Kühlinstallation weitgehend abgekoppelt. Nicht nur wird damit die Vorinvestition für das in die Bauteile eingelegte Rohrsytem nutzlos, darüberhinaus muss auch noch eine teure Nachinstallation vorgenommen werden.

### Darstellung der Erfindung

Aufgabe der Erfindung ist es deshalb, ein Heiz- und Kühlsystem für Gebäude anzugeben, das auf einfache Weise erweitert oder nachgerüstet werden kann und architektonisch grössere Freiheiten bietet. Insbesondere soll das primär verlegte Heiz- und Kühlsystem weiter verwendet werden können. Diese Aufgabe wird durch die Merkmale des ersten Anspruch gelöst.

Kern der Erfindung ist es, dass das in die Bauteile eingelegte, ein Kühl- und/oder Heizmedium führende Rohrsystem für den Anschluss eines mit der Raumluft des Gebäudes in Wirkverbindung stehenden, vorzugsweise wärmetauschenden, Zusatzelementes ausgebildet ist. Dies kann gemäss einem ersten Beispiel dadurch erreicht werden, dass das Rohrsystem an mindestens einer Stelle für das Anbringen von Abzweigstücken ausgebildet ist oder dass das Rohrsystem bereits vor dem Einbau mit mindestens zwei Abzweigstücken versehen wird, die für den Anschluss des Zusatzelementes ausgebildet sind. Bei einem zweiten Beispiel wird das Rohrsystem durch mindestens einen Umschliessungsmantel oder einen Hohlkörper geführt, welcher mit Beton umgossen werden kann. Zum Nachrüsten wird das Betonbauteil an der Stelle des Umschliessungsmantels oder des Hohlkörpers geöffnet und das Rohrsystem aufgeschnitten und Abzweigstücke eingefügt. Sind Vor- und Rücklauf des Rohrsystemes bzw. Rohrregisters genügend nahe nebeneinander genügt ein gemeinsamer Umschliessungsmantel oder Hohlkörper.

Beim Zusatzelement kann es sich insbesondere um ein konventionelles Kühldeckenelement handeln. Im Kühlbetrieb absorbiert das vorzugsweise aus Beton bestehende Bauteil die Wärme, während das Zusatzelement die Raumluft kühlt. Es können somit beide Kühleffekte, Strahlungsabsorbtion und Konvektion, ausgenützt werden.

Die Abzweigstücke umfassen mit Vorteil ein T-Stück oder ein Ventil, insbesondere ein Dreiwegventil, Umstellventil, eine Weiche oder einen Kugelhahn, das mit einem Motorantrieb aus- oder nachgerüstet werden kann. Sie werden nach einen bevorzugten Ausführungsbeispiel mit einem Umschliessungsmantel oder einem Hohlkörper umgeben, der vor der Betonschicht schützt und nach dem Eingiessen der Rohrsystems die Ortung des Abzweigstückes bzw. die Stelle, an denen Abzweigstücke angebracht werden sollen, z.B. durch Klopfen erleichtert. Ferner kann ein zusätzliches Leerrohr für die Aufnahme der elektrischen Anschlusskabel des Motorantriebes vorgesehen werden. Die Kosten für die Ausrüstung des Rohrsystems mit den beschriebenen Abzweigstücken sind minimal.

Bei einem modularen Aufbau des Rohrsystems und der Verwendung von mindestens zwei Modulen wird pro Modul mindestens ein Abzweigstück vorgesehen. Bei erhöhten Anforderungen an das Raumklima kann der Nutzer nach Abschluss des Baus oder gar nach Abschluss des Bezugs die Abzweigstücke modul- bzw. segmentweise oder auch modulübergreifend nachrüsten und öffnen und je nach Bedarf Zusatzelemente wie zusätzliche Kühlelemente anschliessen.

Die Zusatzelemente weisen vorzugsweise eine wärmetauschende Funktion auf und können in der Form von bekannten Kühldecken, Kühldeckenelementen, Kühlsegeln oder Kühlbalken etc. ausgeführt sein. Diese Zusatzelemente erlauben zusätzliche Vorteile, wie akustische, ästhetische oder installationsmässige. Ausserdem gestatten die zusätzlichen Kühlemente eine rasche Reaktion auf Raumlufttemperaturstörungen.

Insgesamt ergibt sich mit der Erfindung ein Heiz- und Kühlsystem für Gebäude, das auf einfache, flexible und günstige Art und Weise nachgerüstet werden kann, und darüberhinaus die Vorteile der vergleichsweise trägen Wärmespeicherung und -absorption eines Betonbauteils mit der dynamischen Kühlfunktion von Wärmetauschelementen kombiniert. Dies erlaubt zudem grössere Heiz- und Kühlleistungen.

### Beschreibung der Zeichnungen

Ein bevorzugtes Ausführungsbeispiel der Erfindung wird nachstehend an Hand der folgenden Zeichnungen erläutert. Die Bezugszeichen sind in der Bezugszeichenliste zusammenfasst aufgeführt.
- Figur 1: zeigt einen Ausschnitt eines Heiz- und Kühlsystems nach dem Stand der Technik im Schnitt
- Figur 2: zeigt perspektivisch und schematisch ein Rohrsystem nach dem Stand der Technik
- Figur 3: zeigt einen Ausschnitt eines Heiz- und Kühlsystems nach der Erfindung im Schnitt und im vorbereiteten Zustand
- Figur 4: zeigt perspektivisch und schematisch ein Rohrsystem nach der Erfindung im vorbereiteten Zustand
- Figur 5: zeigt einen Ausschnitt eines Heiz- und Kühlsystems nach der Erfindung im Schnitt und im aktivierten Zustand
- Figur 6: zeigt perspektivisch und schematisch ein Rohrsystem nach der Erfindung im aktivierten Zustand

### Wege zur Ausführung der Erfindung

Bei dem nachstehend erläuterten Ausführungsbeispiel handelt es sich lediglich um eine bevorzugte Ausführungsform, und die Erfindung ist nicht auf diese Ausführungsform beschränkt.

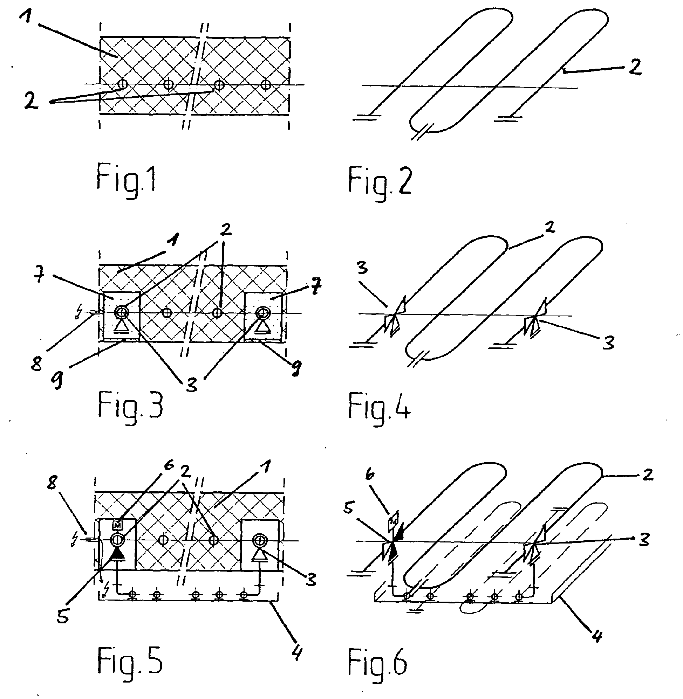

Figur 1 zeigt einen Ausschnitt eines Heiz- und Kühlsystems nach dem Stand der Technik. Im Schnitt ist ein Bauteil 1, d.h. eine Decke, ein Boden oder eine Wand z.B. aus Beton, dargestellt. In das Bauteil 1 ist ein Rohrsystem 2 eingelassen, in welchem im Betrieb vorzugsweise Wasser als Heiz- und Kühlmedium zirkuliert. Figur 2 zeigt das Rohrsystem 2 isoliert und schematisch. Schlangenförmig ist ein Rohr zum Beispiel aus Kunststoff angeordnet. Das Rohrsystem ist vorzugsweise modulartig aufgebaut und wird wie eingangs beschrieben montiert.

Nach der Erfindung weist das Rohrsystem 2, wie in Figur 3 im Schnitt und in Figur 4 schematisch dargestellt ist, mindestens zwei Abzweigstücke 3 auf. Die Abzweigstücke 3 sind mit einem T-Stück oder vorzugsweise einem Ventil 5, z.B. einem Dreiwegventil, ausgerüstet. Ausserdem sind die Abzweigstücke 4 mit Vorteil von einem Umschliessungsmantel oder einem Hohlkörper 7 umgeben, der z.B. aus Holz, Kunststoff oder einem Schaumstoff, wie beispielsweise Styropor, oder einem gleichwertigem Material besteht. Der Umschliessungsmantel oder Hohlkörper 7 dient dazu, dass das Rohrsystem mit Beton vergossen werden kann, und die Abzweigstücke dabei unberührt werden. Der Umschliessungsmantel oder Hohlkörper 7 ist dabei so ausgestaltet, dass nach dem Betonieren eine vergleichsweise dünne Betonüberzugsschicht 9 die Abzweigstücke überdeckt. Im unaktivierten Zustand sind die Abzweigstücke 3 somit nicht ersichtlich. Zum Aktivieren der Abzweigstücke, d.h. Anschliessen eines Zusatzelements 4, kann die Position der Abzweigstücke 3 durch Herauslesen aus den Bauplänen oder z.B. durch Klopfen auf das Bauteil 1 leicht geortet werden. Die Betonüberzugsschicht 9 wird entfernt und der Umschliessungsmantel 7 ebenfalls entfernt oder ausgekratzt. Für den Fall, dass es sich um einen Hohlkörper handelt, wird die raumseitige Abdeckung eingedrückt. Damit sind die Abzweigstücke bereit zum Anschluss eines Zusatzelements 4.

Es versteht sich von selbst, dass aus Kostengründen die Abzweigstücke auch erst nachträglich eingebaut werden können. In diesem Fall wird der Umschliessungsmantel oder Hohlkörper 7 wie oben beschrieben geöffnet, das Rohrsystem aufgeschnitten und die Abzweigstücke angebracht. Für den Fall, dass Vor- und Rücklauf des Rohrsystems bzw. Rohrregisters genügend nahe nebeneinander angeordnet sind, genügt auch ein gemeinsamer Umschliessungsmantel bzw. Hohlkörper pro zu aktivierendes Modul.

Die Figuren 5 und 6 zeigen die Situation mit eingebauten Abzweigstücken. In Figur 5 ist ausserdem dargestellt, dass die Ventile 5 mit einem Motor 6 aus- bzw. nachgerüstet werden können. Zur Ansteuerung des Motors 6 kann ferner vorsorglich ein Leerrohr 8 vorgesehen werden, in das die elektrischen Anschlüsse eingezogen werden können. Das Leerrohr 8 weist ausserdem den Vorteil auf, dass Leuchten oder weitere elektrischen Einrichtungen leicht installiert oder nachgerüstet werden können. Der Motor erlaubt den ferngesteuerten Betrieb des Zusatzelements 4. Bei Zusatzelement 4 kann es sich um eine Kühldecke, ein Kühldeckenelement, ein Kühlsegel, einen Kühlbalken oder ein ähnlich wirkendes Heiz- oder Kühlsystem handeln.

Das Rohrsystem 2 wird vorzugsweise modulartig bzw. in Form von Registern oder Segmenten aufgebaut. Bei Verwendung von mindestens zwei Modulen genügt es, wenn pro Modul lediglich ein Abzweigstück 3 vorgesehen ist. Volle Flexibilität erreicht man dadurch, dass die Module mit mindestens zwei Abzweigstücken 3 versehen werden. In diesem Fall können die Zusatzelemente 4 wahlweise pro Modul oder Modul übergreifend angeschlossen werden. Das Bauteil 1 kann ausserdem mit einer Aussparung zur Aufnahme der Zusatzelemente 4 versehen sein. Bei bündiger Ausführung fallen die Zusatzelemente 4 optisch nicht auf. Vielmehr ergibt sich eine plane Bauteiloberfläche.

Die Aktivierung bzw. der nachträgliche Einbau der Abzweigstücke erfolgt insbesondere dann, wenn im Gebäude mehr Wärmeenergie als geplant abgeführt werden muss. Eine Nachrüstung des Heiz- und Kühlsystem ist für den Betreiber des Gebäudes unumgänglich. Er hat durch die Erfindung die Möglichkeit, das bestehende Heiz- und Kühlsystem auf einfache und günstige Art und Weise durch Anschliessen von Zusatzelementen nachzurüsten. Das primäre, durch das in die Bauteile verlegte System bleibt dabei weiterhin aktiv nutzbar, z.B. als Betonkernkühlung, während das Zusatzsystem die benötigte zusätzliche Kühlleistung zur Verfügung stellen kann. Mit den beiden System hat der Betreiber somit sehr viele Möglichkeiten offen, und die Investition für das primäre System war nicht nutzlos. Die Montage von Zusatzelementen kann ausserdem zur vorteilhaften architektonischen Gestaltung ausgenützt werden. Ferner können die Zusatzelemente eine erwünschte akustisch dämpfende Wirkung entfalten.

### Bezugszeichenliste

- 1: Bauteil
- 2: Rohrsystem
- 3: Abzweigstück
- 4: Zusatzelement
- 5: Ventil
- 6: Motor
- 7: Umschliessungsmantel oder Hohlkörper
- 8: Leerohr, el. Anschluss
- 9: Überzugsschicht

## Patentansprüche

1. Heiz und Kühlsystem für ein Gebäude umfassend ein Bauteil (1), insbesondere aus Beton, in das ein Rohrsystem (2), in dem ein Heiz- oder Kühlmedium zirkuliert, eingelassen ist, wobei das Rohrsystem (2) für den Anschluß mindestens eines mit der Raumluft des Gebäudes direkt in Wirkverbindung stehenden Zusatzelementes (4) ausgebildet ist,
**dadurch gekennzeichnet, daß**
das Rohrsystem durch mindestens einen Umschließungsmantel oder einen Hohlkörper geführt wird, welcher für das Umgiessen mit Beton und nach Entfernung des Betons für die Aufnahme mindestens eines Abzweigstückes (3), an das das Zusatzelement (4) angeschlossen werden kann, vorgesehen ist.

2. Heiz und Kühlsystem nach Anspruch 1, **dadurch gekennzeichnet, dass** das Rohrsystem (2) an mindestens zwei Stellen für das Anbringen von Abzweigstücken (3) ausgebildet ist oder mindestens zwei Abzweigstücke (3) umfasst, an welche Abzweigstücke (3) das Zusatzelementes (4) anschliessbar ist.

3. Heiz und Kühlsystem nach Anspruch 1, **dadurch gekennzeichnet**, das Vor- und Rücklauf des Rohrsystem (2) an mindestens einer Stelle durch einen Umschliessungsmantel oder Hohlkörper (7) geführt werden, welcher für das Umgiessen mit Beton und nach Entfernen des Betons für die Aufnahme von Abzweigstücken (3), an die das Zusatzelement (4) angeschlossen werden kann, vorgesehen ist.

4. Heiz- und Kühlsystem nach einem der vorhergehenden Ansprüche, **dadurch gekennzeichnet, dass** das Abzweigstück (3) ein T-Stück umfasst.

5. Heiz- und Kühlsystem nach einem der vorhergehenden Ansprüche, **dadurch gekennzeichnet, dass** mindestens eines der Abzweigstücke (3) ein Ventil (5), insbesondere ein Dreiwegventil, Umstellventil, Weichenventil oder einen Kugelhahn, für den Anschluss und die Ansteuerung des Zusatzelements (4) umfasst.

6. Heiz- und Kühlsystem nach einem der vorhergehenden Ansprüche, **dadurch gekennzeichnet, dass** das Ventil (5) mit einem Motor (6) nach- oder ausrüstbar ist.

7. Heiz- und Kühlsystem nach einem der vorhergehenden Ansprüche, **dadurch gekennzeichnet, dass** mindestens eines der Abzweigstück (3) von einen Umschliessungsmantel oder Hohlkörper (7), insbesondere aus Holz, Kunststoff, Styropor oder einem gleichwertigen Material, umgeben ist, welcher Umschliessungsmantel oder Hohlkörper für ein Umgiessen mit Beton vorgesehen ist.

8. Heiz- und Kühlsystem nach einem der vorstehenden Ansprüche, **dadurch gekennzeichnet, dass** die raumseitige Abdeckung des Hohlkörpers aus einem eindrückbaren Material besteht.

9. Heiz- und Kühlsystem nach einem der vorstehenden Ansprüche, **dadurch gekennzeichnet, dass** zwei Abzweigstücke (3) von einen gemeinsamen Umschliessungsmantel (7) umgeben bzw. in einem gemeinsamen Hohlkörper angeordnet sind.

10. Heiz- und Kühlsystem nach einem der vorhergehenden Ansprüche, **dadurch gekennzeichnet, dass** im Bereich des Umschliessungsmantels bzw. Hohlkörpers (7) ein Leerrohr (8) zwecks Heranführen von elektrischen Installationen, insbesondere zur Ansteuerung des Motors (6) des Ventils (5), vorgesehen ist.

11. Heiz- und Kühlsystem nach einem der vorhergehenden Ansprüche, **dadurch gekennzeichnet, dass** das Zusatzelement (4) eine Kühldecke, ein Kühldeckenelement, ein Kühlsegel oder einen Kühlbalken umfasst.

12. Heiz- und Kühlsystem nach einem der vorhergehenden Ansprüche, **dadurch gekennzeichnet, dass** das Rohrsystem (2) modulartig aufgebaut ist, dass mindestens zwei Module vorgesehen sind und die Module je ein Abzweigstück (3) umfassen.

13. Heiz- und Kühlsystem nach einem der vorhergehenden Ansprüche, **dadurch gekennzeichnet, dass** das Rohrsystem (2) modulartig aufgebaut ist und die Module mindestens zwei Abzweigstücke (3) umfassen.

14. Heiz- und Kühlsystem nach einem der vorhergehenden Ansprüche, **dadurch gekennzeichnet, dass** das Bauteil (1) mindestens eine Aussparung zur Aufnahme mindestens eines Zusatzelementes (4) aufweist.

15. Rohrregister, **dadurch gekennzeichnet, dass** es als Rohrsystem für ein Heiz- und Kühlsystem nach einem der vorstehenden Ansprüche geeignet ist.

## Claims

1. Heating and cooling system for a building having a construction member (1), made in particular of concrete, in which a piping system (2) is embedded through which a heating or cooling medium circulates, whereby the piping system (2) is formed for connecting to at least one additional element (4) which directly interacts with the ambient air of the building,
**characterized in that**
the piping system is guided through at least one enclosing jacket or hollow body that is adapted for concrete to be cast around it and, after concrete removal, for receiving of at least one branch-off piece (3) to which the additional element (4) can be connected.

2. The heating and cooling system according to claim 1, **characterized in that** the piping system (2) is formed to allow for the connection of branch-off pieces (3) at at least two locations, or has at least two branch-off pieces (3) to which the additional element (4) is connectable.

3. The heating and cooling system according to claim 1, **characterized in that** the flow and return of the piping system (2) is guided, at least at one location, through an enclosing jacket or hollow body (7) that is adapted for concrete to be cast around it and, after concrete removal, for the receiving of branch-off pieces (3) to which the additional element (4) can be connected.

4. The heating and cooling system according to any one of the preceding claims, **characterized in that** the branch-off piece (3) includes a T-piece.

5. The heating and cooling system according to any one of the preceding claims, **characterized in that** at least one of the branch-off pieces (3) is a valve (5), in particular a three-way valve, a change valve, a switch valve, or a ball valve, for the connection and the controlling of the additional element (4).

6. The heating and cooling system according to any one of the preceding claims, **characterized in that** the valve (5) can be equipped or upgraded with a motor (6).

7. The heating and cooling system according to any one of the preceding claims, **characterized in that** at least one of the branch-off pieces (3) is surrounded by an enclosing jacket or hollow body (7) made, in particular, of wood, plastic, Styrofoam or an equivalent material, whereby the enclosing jacket or hollow body (7) is adapted for concrete to be cast around it.

8. The heating and cooling system according to any one of the preceding claims, **characterized in that** the coverage of the hollow body facing the room is made of a material that can be impressed.

9. The heating and cooling system according to any one of the preceding claims, **characterized in that** two branch-off pieces (3) are surrounded by a common enclosing jacket or positioned within a common hollow body (7).

10. The heating and cooling system according to any one of the preceding claims, **characterized in that** a conduit is provided in the region of the enclosing jacket or hollow body for introducing electrical installation, in particular for controlling the motor (6) of the valve (5)

11. The heating and cooling system according to any one of the preceding claims, **characterized in that** the additional element (4) includes a cooling ceiling, a cooling ceiling element, a cooling sail or a cooling beam.

12. The heating and cooling system according to any one of the preceding claims, **characterized in that** the piping system (2) is made of modules, **in that** at least two modules are provided, and **in that** each of the modules includes a branch-off piece (3).

13. The heating and cooling system according to any one of the preceding claims, **characterized in that** the piping system (2) is made of modules, and **in that** each of the modules includes at least two branch-off pieces (3).

14. The heating and cooling system according to any one of the preceding claims, **characterized in that** the construction member (1) includes at least one recess for the reception of at least one additional element (4).

15. Piping register **characterized in that**, as a piping system, it is suitable for for a heating and cooling system according to any one of the preceding claims.

## Revendications

1. Installation de chauffage et de refroidissement pour un immeuble, comprenant un élément de construction, en particulier en béton, dans lequel est noyé un réseau de tuyaux (2) où circule un milieu de chauffage ou de refroidissement, le réseau de tuyaux (2) étant conçu pour permettre le raccordement d'au moins un élément supplémentaire (4) qui est en relation effective directe avec l'air des pièces de l'immeuble, **caractérisée en ce que** le réseau de tuyaux est posé dans au moins une gaine enveloppante ou un corps creux qui est prévu pour être coulé dans le béton et pour recevoir, après enlèvement du béton, au moins un élément de branchement (3) auquel l'élément supplémentaire (4) peut être raccordé.

2. Installation de chauffage et de refroidissement selon la revendication 1, **caractérisée en ce que** le réseau de tuyaux (2) est configuré pour permettre la pose d'éléments de branchement (3) en au moins deux endroits, ou qu'il comprend au moins deux éléments de branchement (3) auxquels l'élément supplémentaire peut être raccordé.

3. Installation de chauffage et de refroidissement selon la revendication 1, **caractérisée en ce qu'**en au moins un endroit, l'aller et le retour du réseau de tuyaux (2) sont posés dans la gaine enveloppante ou le corps creux (7) qui est prévu pour être coulé dans le béton et pour recevoir, après enlèvement du béton, des éléments de branchement (3) auxquels l'élément supplémentaire peut être raccordé.

4. Installation de chauffage et de refroidissement selon une des revendications précédentes, **caractérisée en ce que** l'élément de branchement (3) comprend un élément en té.

5. Installation de chauffage et de refroidissement selon une des revendications précédentes, **caractérisée en ce qu'**au moins un des éléments de branchement (3) comprend une vanne (5), en particulier une vanne à trois voies, une vanne d'inversion, une vanne d'aiguillage ou un robinet à boule pour le raccordement et la commande de l'élément supplémentaire (4).

6. Installation de chauffage et de refroidissement selon une des revendications précédentes, **caractérisée en ce que** la vanne (5) peut être équipée d'un moteur ou peut être remise à niveau au moyen d'un moteur (6).

7. Installation de chauffage et de refroidissement selon une des revendications précédentes, **caractérisée en ce qu'**au moins un des éléments de branchement (3) est entouré d'une gaine enveloppante ou d'un corps creux (7), en particulier, en bois, matière plastique, polystyrène expansé ou matériau équivalent, laquelle gaine enveloppante ou lequel corps creux est prévu pour être coulé dans le béton.

8. Installation de chauffage et de refroidissement selon une des revendications précédentes, **caractérisée en ce que** le recouvrement côté pièce du corps creux est composé d'un matériau défonçable.

9. Installation de chauffage et de refroidissement selon une des revendications précédentes, **caractérisée en ce que** deux éléments de branchement (3) sont entourés d'une gaine enveloppante commune ou disposés dans un corps creux commun.

10. Installation de chauffage et de refroidissement selon une des revendications précédentes, **caractérisée en ce que**, dans la région de la gaine enveloppante ou du corps creux (7), est prévu un tube vide (8) destiné à amener des lignes électriques, en particulier pour la commande du moteur (6) de la vanne (5).

11. Installation de chauffage et de refroidissement selon une des revendications précédentes, **caractérisée en ce que** l'élément supplémentaire (4) comprend un plafond de refroidissement, un élément de plafond de refroidissement, un panneau de refroidissement ou une poutre de refroidissement.

12. Installation de chauffage et de refroidissement selon une des revendications précédentes, **caractérisée en ce que** le réseau de tuyaux (2) est de construction modulaire, **en ce qu'**il est prévu au moins deux modules et **en ce que** les modules comprennent chacun un élément de branchement (3).

13. Installation de chauffage et de refroidissement selon une des revendications précédentes, **caractérisée en ce que** le réseau de tuyaux (2) est de construction modulaire et que les modules comprennent au moins deux élément de branchement (3).

14. Installation de chauffage et de refroidissement selon une des revendications précédentes, **caractérisée en ce que** l'élément de construction (1) présente au moins une cavité destinée à loger au moins un élément supplémentaire (4).

15. Nappe de tuyaux **caractérisée en ce qu'**elle est apte à servir de réseau de tuyaux pour une installation de chauffage et de refroidissement selon une des revendications précédentes.
